# EUROPÄISCHE PATENTANMELDUNG

(11) **EP 4 700 349 A1**
(43) Veröffentlichungstag der Anmeldung: **25.02.2026**
(21) Anmeldenummer: 25196660.2
(22) Anmeldetag: 19.08.2025
(51) Int. Cl.: G01K 7/12, A47J 9/00

(54) **GARGESCHIRR**

(30) Priorität: 21.08.2024 BE 202405551
(71) Anmelder: Miele & Cie. KG, 33332 Gütersloh (DE)
(72) Erfinder: Müller, Christoph, 32289 Rödinghausen (DE); Hölscher, Britta, 30167 Hannover (DE)

(57) **Zusammenfassung**

Gargeschirr (1) mit einem Gargeschirrgrundkörper (2) und einer Gehäuseeinrichtung (4) und einer Elektronikeinrichtung (3) mit einer Messeinrichtung (13) zur Temperaturüberwachung. Die Messeinrichtung (13) umfasst eine Sensoreinheit (5) mit einem Thermoelement (15) mit zwei Leiterenden (25) und eine Auswerteeinrichtung (6) zur Auswertung eines Sensorsignals der Sensoreinheit (5). Die Leiterenden (25) sind mittels einer Sensoranschlusseinheit (7) mit der Auswerteeinrichtung (6) kontaktiert. Die Sensoranschlusseinheit (7) umfasst für die Leiterenden (25) jeweils eine Kontaktstelle (17). Die Auswerteeinrichtung (6) umfasst eine Messelektronik (16) zur Kaltstellentemperaturmessung und eine Auswerteelektronik (26). Dabei sind die Sensoranschlusseinheit (7) und die Messelektronik (16) gemeinsam auf einer Vergleichsstellenleiterkarte (8) angeordnet. Die Vergleichsstellenleiterkarte (8) ist räumlich beabstandet zu einer Basisleiterkarte (9) in der Gehäuseeinrichtung (4) angeordnet. Auf der Basisleiterkarte (9) ist wenigstens die Auswerteelektronik (26) angeordnet.

## Beschreibung

Die vorliegende Erfindung betrifft ein Gargeschirr mit einem Gargeschirrgrundkörper und einer Gehäuseeinrichtung und einer in der Gehäuseeinrichtung eingehausten Elektronikeinrichtung mit einer Messeinrichtung zur Temperaturüberwachung. Die Messeinrichtung umfasst wenigstens eine Sensoreinheit mit wenigstens einem Thermoelement.

Ein solches Gargeschirr kann mit seiner Elektronikeinrichtung verschiedene Assistenzfunktionen bereitstellen. Beispielsweise kann ein Kochfeld während eines Garvorgangs in Abhängigkeit von der im Gargeschirrgrundkörper vorliegenden Temperatur angesteuert werden. Für einen hohen Bedienkomfort weist die Elektronikeinrichtung oft auch Bedienelemente und eine Anzeige bzw. ein Display auf.

Damit die Assistenzfunktionen verlässlich funktionieren, muss die Temperaturüberwachung zuverlässige bzw. reproduzierbare Temperaturwerte liefern. Dazu sollte die Messeinrichtung bzw. deren Sensoreinheit möglichst nah an dem Gargeschirrgrundkörper und z. B. an dessen Boden angeordnet sein. Andererseits sollte die Auswerteeinrichtung der Messeinrichtung möglichst weit von den im Betrieb oft sehr heißen Teilen des Gargeschirrgrundkörpers entfernt liegen. Diese Anforderungen sind jedoch schwierig zu erfüllen, da in der Gehäuseeinrichtung meist nur sehr wenig Bauraum für die Messeinrichtung zur Verfügung steht, damit das Aufnahmevolumen des Gargeschirrgrundkörpers und die Nutzfläche auf dem Kochfeld nicht unerwünscht eingeschränkt werden.

Für die Überwachung der Temperaturen im Gargeschirr können Thermoelemente als Sensoreinheiten eingesetzt werden. Dabei müssen deren Leiterenden oft mit einer Verlängerung ausgestattet werden, um die im Betrieb heiße Messstelle des Thermoelements und die hitzeempfindliche Auswerteeinrichtung möglichst weit voneinander entfernt positionieren zu können. Allerdings sind solche Verlängerungen kostenintensiv. Zudem haben sich die Verlängerungen unter den zu erwartenden Betriebsbedingungen (heiße und fetthaltige Umgebung, Spülmaschinenreinigung) als nicht ausreichend robust und haltbar erwiesen.

Aufgrund der besonderen Anforderungen bei dem Einsatz in einem Gargeschirr und des begrenzten Bauraums hat sich zudem auch die Anordnung der Bauteile für die Kaltstellenkompensation als problematisch erwiesen. Dadurch, dass die hitzeempfindliche Auswerteeinrichtung möglichst weit von den heißen Teilen des Gargeschirrgrundkörpers und der Messstelle entfernt liegen sollte, kann die Sensoranschlusseinheit für die Kontaktierung der Leiterenden mit der Auswerteeinrichtung (sog. Kaltstelle; auch als Vergleichsstelle oder Übergangsstelle bezeichnet) nicht nah genug am Ort der Kaltstellentemperaturmessung angeordnet werden. Dadurch kann die Spannungserzeugung an der Kaltstelle nicht ausreichend bewertet werden, um eine verlässliche Temperaturüberwachung zu ermöglichen.

Demgegenüber ist es die Aufgabe der vorliegenden Erfindung, ein verbessertes Gargeschirr zur Verfügung zu stellen. Insbesondere soll das Gargeschirr eine zuverlässige bzw. reproduzierbare Temperaturüberwachung von Garvorgängen bieten, sodass Assistenzfunktionen verlässlich bereitgestellt werden können.

Diese Aufgabe wird gelöst durch ein Gargeschirr mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Gargeschirr umfasst einen Gargeschirrgrundkörper und eine (an und/oder in dem Gargeschirrgrundkörper angeordnete) Gehäuseeinrichtung und eine in der Gehäuseeinrichtung eingehauste Elektronikeinrichtung. Die Elektronikeinrichtung umfasst eine Messeinrichtung zur Temperaturüberwachung. Die Messeinrichtung umfasst wenigstens eine Sensoreinheit mit wenigstens einem Thermoelement. Das Thermoelement umfasst wenigstens zwei Leiterenden. Die Messeinrichtung umfasst wenigstens eine Auswerteeinrichtung zur Auswertung eines Sensorsignals der wenigstens einen Sensoreinheit. Die Leiterenden sind mittels einer Sensoranschlusseinheit mit der Auswerteeinrichtung kontaktiert. Die Sensoranschlusseinheit umfasst für die Leiterenden jeweils wenigstens eine Kontaktstelle. Die Auswerteeinrichtung umfasst eine Messelektronik zur Kaltstellentemperaturmessung (an der Sensoranschlusseinheit) und eine Auswerteelektronik (zur Verarbeitung des Sensorsignals der Sensoreinheit in Abhängigkeit des Messsignals der Messelektronik). Dabei sind die Sensoranschlusseinheit und die Messelektronik gemeinsam auf einer Vergleichsstellenleiterkarte angeordnet. Mit anderen Worten, die Sensoranschlusseinheit und die Messelektronik sind auf einer gemeinsamen Leiterkarte, der sog. Vergleichsstellenleiterkarte, angeordnet. Dabei ist die Vergleichsstellenleiterkarte räumlich beabstandet zu einer Basisleiterkarte in der Gehäuseeinrichtung angeordnet. Insbesondere ist die Vergleichsstellenleiterkarte separat zur Basisleiterkarte ausgebildet. Dabei ist auf der Basisleiterkarte wenigstens die Auswerteelektronik angeordnet. Insbesondere sind die Vergleichsstellenleiterkarte und die Basisleiterkarte jeweils separate Leiterkarten und vorzugsweise thermisch voneinander entkoppelt. Insbesondere sind die Messelektronik und die Auswerteelektronik räumlich beabstandet voneinander in der Gehäuseeinrichtung angeordnet.

Die vorliegende Erfindung bietet viele Vorteile. Einen erheblichen Vorteil bieten die separaten und beabstandeten Leiterkarten. Dadurch sind die Sensoranschlusseinheit und die Messelektronik von der Auswerteelektronik entkoppelt, sodass eine besonders zuverlässige und reproduzierbare Temperaturüberwachung auch unter den speziellen Bedingungen des Gargeschirrs möglich ist. Die Erfindung biete eine verbesserte Überwachung der Temperaturen im Gargeschirr, welche Bauraum sparend und konstruktiv unaufwendig umsetzbar ist. Mit der Erfindung können Assistenzfunktionen besonders verlässlich bereitgestellt werden. Ein erheblicher Vorteil ist auch, dass die Kaltstellenkompensation näher an den Kontaktstellen positioniert werden kann. Dadurch wird der Einsatz von kostenintensiven und oft nicht flüssigkeitsdichten Verlängerungen für die Thermoelemente vermieden.

Die Messelektronik umfasst vorzugsweise wenigstens eine Temperatursensorik zur Bestimmung bzw. Messung der Temperatur der Vergleichsstellenleiterkarte. Vorzugsweise ist die Temperatursensorik auf der Vergleichsstellenleiterkarte angeordnet. Insbesondere ist die Auswerteelektronik dazu geeignet und ausgebildet, aus der von der wenigstens einen Sensoreinheit gelieferten elektrischen Spannung und der mittels der Temperatursensorik erfassten Temperatur der Vergleichsstellenleiterkarte die Temperatur an der Messstelle zu bestimmen. Insbesondere umfasst die Temperatursensorik wenigstens einen Temperatursensor. Vorzugsweise umfasst die Temperatursensorik wenigstens einen Temperatursensor für jede Kontaktstelle der Sensoreinheit.

In einer vorteilhaften Ausgestaltung umfasst die Temperatursensorik wenigstens einen Thermistor. Insbesondere ist die Temperatursensorik dazu geeignet und ausgebildet, ihren Widerstand in Abhängigkeit der Temperatur der Vergleichsstellenleiterkarte zu ändern. Insbesondere ist die Auswerteelektronik dazu geeignet und ausgebildet, anhand des Widerstands der Temperatursensorik die Temperatur der Vergleichsstellenleiterkarte zu bestimmen. Insbesondere ist der Thermistor als ein Heißleiter (NTC) oder als ein Kaltleiter (PTC) ausgebildet. Möglich sind auch andere geeignete Temperatursensoren.

In einer bevorzugten und vorteilhaften Weiterbildung stellen die Vergleichsstellenleiterkarte und die darauf angeordneten Komponenten, umfassend wenigstens die Sensoranschlusseinheit und die Messelektronik, einen isothermen Block bereit. Insbesondere ist der isotherme Block von der Basisleiterkarte (und somit auch von der Auswerteelektronik) thermisch entkoppelt.

Auf dem isothermen Block sind die Kontaktstellen vorzugsweise wärmeleitend verbunden und insbesondere elektrisch voneinander isoliert. Insbesondere sind dadurch die wenigstens zwei Leiterenden auf gleicher Temperatur an der Sensoranschlusseinheit kontaktiert. Das ermöglicht eine besonders verlässliche Temperaturerfassung. Insbesondere wird die Temperatur der Vergleichsstellenleiterkarte bzw. des isothermen Blocks mittels der Messelektronik und insbesondere ihrer Temperatursensorik erfasst.

Der isotherme Block ist vorzugsweise in eine Vergussmasse eingebettet. Insbesondere erstreckt sich die Vergussmasse wenigstens abschnittsweise zwischen der Vergleichsstellenleiterkarte und der Basisleiterkarte. Insbesondere weist die Vergussmasse wärmeisolierende und/oder elektrisch isolierende Eigenschaften auf. Vorzugsweise sind die Vergleichsstellenleiterkarte und die darauf angeordneten Komponenten (im Wesentlichen) vollständig in die Vergussmasse eingebettet. Die Vergussmasse ist beispielsweise als ein Harz oder ein anderes geeignetes Kunststoffmaterial ausgebildet. Insbesondere sind die Vergleichsstellenleiterkarte und somit auch die Kontaktstellen mittels der Vergussmasse flüssigkeitsdicht bzw. wasserdicht eingebettet.

Es ist bevorzugt und vorteilhaft, dass der isotherme Block (oder zumindest die Vergleichsstellenleiterkarte) mittels wenigstens einer Gehäusewandung der Gehäuseeinrichtung von dem Gargeschirrgrundkörper und/oder von einer Energiespeichereinrichtung zur Energieversorgung der Elektronikeinrichtung räumlich isoliert ist. Dadurch werden die isothermen Eigenschaften des Blocks weiter verbessert. Die Gehäusewandung kann einteilig oder mehrteilig ausgebildet sein.

Insbesondere ist auch die Basisleiterkarte mittels wenigstens einer Gehäusewandung von dem Gargeschirrgrundkörper und/oder von der Energiespeichereinrichtung isoliert. Insbesondere ist die Basisleiterkarte über Batteriekontakte mit der Energiespeichereinrichtung kontaktiert. Insbesondere erstrecken sich die Batteriekontakte dabei durch die Gehäusewandung. Insbesondere umfasst die Energiespeichereinrichtung wenigstens eine Batterie und/oder einen Akku oder dergleichen.

Es ist möglich und vorteilhaft, dass die Vergleichsstellenleiterkarte mittels einer Kontaktstiftanordnung und vorzugsweise nur mittels einer Kontaktstiftanordnung mit der Basisleiterkarte verbunden ist. Insbesondere erstreckt sich die Kontaktstiftanordnung aus der Vergussmasse heraus. Insbesondere ist die Kontaktstiftanordnung wenigstens teilweise in der Vergussmasse eingebettet. Insbesondere erstreckt sich die Sensoreinheit (insbesondere mit ihren Leitern) aus der Vergussmasse heraus. Insbesondere erstrecken sich nur die Kontaktstiftanordnung und/oder die Sensoreinheit aus der Vergussmasse heraus. Bitte dieses bzw. hindurch streichen.

Die Kontaktstiftanordnung umfasst insbesondere Kontaktstifte und vorzugsweise gefederte Kontaktstifte. Beispielsweise sind die Kontaktstifte als Pogo-Pins oder dergleichen ausgebildet.

Insbesondere kann die Basisleiterkarte mittels der Kontaktstiftanordnung zerstörungsfrei von der Vergleichsstellenleiterkarte getrennt werden.

Es ist besonders bevorzugt und vorteilhaft, dass die Leiterenden der wenigstens einen Sensoreinheit direkt mit der jeweiligen Kontaktstelle kontaktiert sind. Insbesondere sind die Leiterenden direkt auf der Vergleichsstellenleiterkarte kontaktiert.

Besonders bevorzugt sind die Leiterenden der wenigstens einen Sensoreinheit mit der jeweiligen Kontaktstelle vercrimpt. Insbesondere werden die Kontaktstellen dadurch bereitgestellt, dass die Leiterenden direkt auf die Vergleichsstellenleiterkarte gecrimpt sind. Die Kontaktstellen sind insbesondere als Crimpverbindungen ausgebildet. Möglich sind auch andere geeignete Kontaktverbindungen. Beispielsweise können Lötverbindungen oder dergleichen vorgesehen sein.

Im Rahmen der vorliegenden Erfindung umfasst die Temperaturüberwachung insbesondere die Erfassung wenigstens einer für die Temperatur im Aufnahmevolumen charakteristischen Kenngröße. Insbesondere ist die Kenngröße mittels der Sensoreinheit am und/oder im Gargeschirrgrundkörper und beispielsweise an und/oder in dessen Boden erfassbar.

Die Leiterenden der Sensoreinheit gehören insbesondere zu jeweils einem Leiter der Sensoreinheit. Die Leiter bestehen insbesondere aus verschiedenen Metallwerkstoffen. Insbesondere umfassen die Leiter jeweils ein weiteres Leiterende. An dem weiteren Leiterende sind die Leiter insbesondere miteinander verbunden. Das weitere Leiterende repräsentiert insbesondere Vergleichsstelle bzw. Kaltstelle oder Übergabestelle bezeichnet werden. Die Kaltstellentemperaturmessung kann auch als Temperaturmessung an der Vergleichsstelle bzw. Kaltstelle oder Übergabestelle bezeichnet werden. Insbesondere ist mittels der Sensoreinheit eine Temperaturdifferenz zwischen der Messstelle und der Sensoranschlusseinheit bzw. der Kaltstelle erfassbar. Insbesondere liefert die Sensoreinheit eine von der Temperaturdifferenz abhängige elektrische Spannung.

Insbesondere umfasst der Gargeschirrgrundkörper wenigstens einen Boden und wenigstens eine Wandung. Insbesondere wird durch den Boden und die Wandlung wenigstens ein Aufnahmevolumen begrenzt. Der Kochgeschirrgrundkörper ist insbesondere als eine Pfanne, ein Topf, ein Wasserkocher und/oder ein Bräter oder dergleichen ausgebildet. Die Gehäuseeinrichtung ist insbesondere als ein Griff und vorzugsweise ein Stielgriff und/oder als ein Bedienpult ausgebildet. Die Gehäuseeinrichtung ist insbesondere aus Kunststoff und/oder einem Verbundwerkstoff gefertigt. Die Elektronikeinrichtung umfasst insbesondere auch eine Benutzerschnittstelle (z. B. Bedieneinrichtung und/oder Anzeigeeinrichtung) und/oder eine Kommunikationseinrichtung zur drahtlosen Kommunikation mit wenigstens einem Küchengerät und zum Beispiel einer Kochfeldeinrichtung.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Gargeschirrs in einer Seitenansicht;
- Figur 2: eine stark schematisierte Detaildarstellung eines erfindungsgemäßen Gargeschirrs; und
- Figur 3: eine weitere rein schematische Darstellung eines erfindungsgemäßen Gargeschirrs.

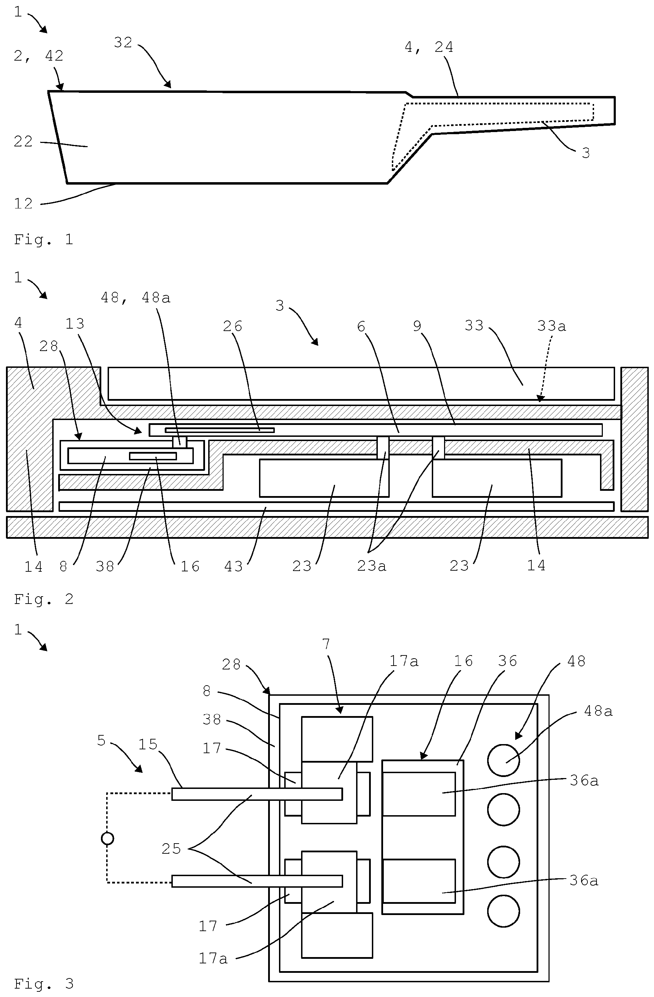

Die Figur 1 zeigt ein erfindungsgemäßes Gargeschirr 1 mit einem als Pfanne 42 ausgebildeten Gargeschirrgrundkörper 2. Der Gargeschirrgrundkörper 2 hat einen Boden 12 und eine Wandung 22, welche zusammen ein Aufnahmevolumen 32 für das Gargut begrenzen. Um während des Garvorgangs verschiedene Assistenzfunktionen zu ermöglichen, ist das Gargeschirr 1 mit einer Elektronikeinrichtung 3 ausgestattet. Die Elektronikeinrichtung 3 ist in einer Gehäuseeinrichtung 4 untergebracht, welche hier durch einen Stielgriff 24 für die Pfanne 42 bereitgestellt wird. Der Stielgriff 24 ist an einer Außenseite der Wandung 22 befestigt. Die Elektronikeinrichtung 3 wird mit Bezug zu den Figuren 2 und 3 näher beschrieben.

Das Gargeschirr 1 und insbesondere der Aufbau der Elektronikeinrichtung 3 werden nachfolgend mit Bezug zu den Figuren 2 und 3 näher vorgestellt. Die in der Figur 2 dargestellte Gehäuseeinrichtung 4 kann beispielsweise einen Teil des Stielgriffs 24 der Figur 1 bereitstellen. Die Gehäuseeinrichtung 4 kann aber auch als ein Bedienpult für einen Topf oder dergleichen ausgebildet sein.

Die Elektronikeinrichtung 3 umfasst hier eine Messeinrichtung 13 zur Temperaturüberwachung und eine Benutzerschnittstelle 33 sowie eine nicht dargestellte Kommunikationseinrichtung zur drahtlosen Kommunikation mit einem Kochfeld. Die Benutzerschnittstelle 33 umfasst beispielsweise Bedienelemente und eine Anzeige bzw. ein Display. Die Benutzerschnittstelle 33 ist hier so in der Gehäuseeinrichtung 4 eingehaust, dass sie von außen zugänglich und einsehbar ist. Dabei ist die Benutzerschnittstelle 33 über ein hier nicht dargestelltes Flachbandkabel 33a bzw. eine flexible Leiterkarte kontaktiert. Über eine Energiespeichereinrichtung 23 und beispielsweise eine oder mehrere Batterien bzw. Akkus wird die Elektronikeinrichtung 3 mit elektrischer Energie versorgt. Unterhalb der Elektronikeinrichtung 3 erstreckt sich hier ein Abschirmelement 43 zur Abschirmung von magnetischen und/oder elektrischen Feldern, welche beispielsweise von einem Induktionskochfeld im Betrieb ausgehen können.

Die Messeinrichtung 13 umfasst eine in der Figur 3 näher dargestellte Sensoreinheit 5 mit einem Thermoelement 15 mit zwei Leiterenden 25. Die Leiterenden 25 sind die Enden jeweils eines Leiters, wie es in der Figur 3 gestrichelt skizziert ist. An einer Messstelle sind die Leiter direkt miteinander kontaktiert. Die Messstelle liegt beispielsweise in und/oder an dem hier nicht dargestellten Gargeschirrgrundkörper 2.

Die Leiterenden 25 sind mittels einer Sensoranschlusseinheit 7 mit einer Auswerteeinrichtung 6 zur Auswertung ihres Sensorsignals kontaktiert. Dazu weist die Sensoranschlusseinheit 7 für die Leiterenden 25 jeweils eine Kontaktstelle 17 auf. Die Sensoranschlusseinheit 7 und ihre Kontaktstellen 17 stellen hier die Kaltstelle bzw. Vergleichsstelle bereit.

Die Auswerteeinrichtung 6 umfasst eine Messelektronik 16 und eine separat dazu ausgebildete Auswerteelektronik 26. Die Messelektronik 16 umfasst eine Temperatursensorik 36 zur Temperaturmessung an der Sensoranschlusseinheit 7 bzw. an der Kaltstelle. Dazu ist die Temperatursensorik 36 hier lediglich beispielhaft mit zwei Thermistoren 36a ausgestattet, sodass für jede Kontaktstelle 17 jeweils ein Thermistor 36a bereitsteht. Die Auswerteelektronik 26 verarbeitet sowohl das Signal der Sensoreinheit 5 mit dem wenigstens einen Thermoelement 15 als auch das Signal der Temperatursensorik 36. Daraus ermittelt die Auswerteelektronik 26 die Temperatur an der Messstelle.

Die Sensoranschlusseinheit 7 und die Messelektronik 16 sind auf einer gemeinsamen Leiterkarte, nämlich der Vergleichsstellenleiterkarte 8, angeordnet. Die Auswerteelektronik 26 ist hingegen auf einer eigenen Leiterkarte, nämlich der Basisleiterkarte 9, angeordnet. Dabei sind die Basisleiterkarte 9 und die Vergleichsstellenleiterkarte 8 räumlich und thermisch voneinander entkoppelt in der Gehäuseeinrichtung 4 untergebracht.

Die Vergleichsstellenleiterkarte 8 und die Basisleiterkarte 9 sind hier lediglich durch eine Kontaktstiftanordnung 48 mit beispielsweise vier Kontaktstiften 48a elektrisch miteinander verbunden. Durch die Anordnung der Sensoranschlusseinheit 7 und der Messelektronik 16 auf der gemeinsamen Leiterkarte 8 und deren Entkopplung von der Basisleiterkarte 9 kann die Spannungserzeugung an der Kaltstelle sehr zuverlässig bewertet werden, sodass eine reproduzierbare Temperaturüberwachung möglich ist.

Die Vergleichsstellenleiterkarte 8 und die darauf angeordnete Sensoranschlusseinheit 7 sowie die Messelektronik 16 stellen hier einen isothermen Block 28 bereit. Dazu sind die gesamte Vergleichsstellenleiterkarte 8 und die darauf angeordnete Sensoranschlusseinheit 7 sowie auch die Messelektronik 16 hier in einer Vergussmasse 38 eingebettet. Dadurch ergibt sich eine räumliche bzw. thermische Abgrenzung gegenüber den anderen in der Gehäuseeinrichtung 4 aufgenommenen Komponenten. Lediglich die Kontaktstifte 48a und die Leiterenden 25 ragen aus der Vergussmasse 38 heraus. Der isotherme Block 28 ist also nur mittels der Kontaktstiftanordnung 48 mit der Basisleiterkarte 9 verbunden. Zudem sind die Kontaktstellen 17 durch die Vergleichsstellenleiterkarte 8 wärmeleitend miteinander verbunden und zugleich elektrisch voneinander isoliert. Dabei sind die Leiterenden 25 direkt auf der Vergleichsstellenleiterkarte 8 mittels Crimpverbindungen 17a kontaktiert.

Zur besseren räumlichen und thermischen Entkopplung ist der isotherme Block 28 hier mittels einer oder mehrerer Gehäusewandungen 14 der Gehäuseeinrichtung 4 von dem Gargeschirrgrundkörper 2 und der Energiespeichereinrichtung 23 separiert. Eine Gehäusewandung 14 erstreckt sich zudem auch zwischen der Basisleiterkarte 9 und der Energiespeichereinrichtung 23. Zur elektrischen Anbindung erstrecken sich Batteriekontakte 23a durch die Gehäusewandung 14 hindurch.

### Bezugszeichenliste

- 1: Gargeschirr
- 2: Gargeschirrgrundkörper
- 3: Elektronikeinrichtung
- 4: Gehäuseeinrichtung
- 5: Sensoreinheit
- 6: Auswerteeinrichtung
- 7: Sensoranschlusseinheit
- 8: Vergleichsstellenleiterkarte
- 9: Basisleiterkarte
- 12: Boden
- 13: Messeinrichtung
- 14: Gehäusewandung
- 15: Thermoelement
- 16: Messelektronik
- 17: Kontaktstelle
- 17a: Crimpverbindung
- 22: Wandung
- 23: Energiespeichereinrichtung
- 23a: Batteriekontakt
- 24: Stielgriff
- 25: Leiterende
- 26: Auswerteelektronik
- 28: Block
- 32: Aufnahmevolumen
- 33: Benutzerschnittstelle
- 33a: Flachbandkabel
- 36: Temperatursensorik
- 36a: Thermistor
- 38: Vergussmasse
- 42: Pfanne
- 43: Abschirmelement
- 48: Kontaktstiftanordnung
- 48a: Kontaktstift

## Patentansprüche

1. Gargeschirr (1) umfassend einen Gargeschirrgrundkörper (2) und eine Gehäuseeinrichtung (4) und eine in der Gehäuseeinrichtung (4) eingehauste Elektronikeinrichtung (3) mit einer Messeinrichtung (13) zur Temperaturüberwachung, wobei die Messeinrichtung (13) wenigstens eine Sensoreinheit (5) mit wenigstens einem Thermoelement (15) mit zwei Leiterenden (25) und wenigstens eine Auswerteeinrichtung (6) zur Auswertung eines Sensorsignals der Sensoreinheit (5) umfasst, wobei die Leiterenden (25) mittels einer Sensoranschlusseinheit (7) mit der Auswerteeinrichtung (6) kontaktiert sind und wobei die Sensoranschlusseinheit (7) für die Leiterenden (25) jeweils eine Kontaktstelle (17) aufweist und wobei die Auswerteeinrichtung (6) eine Messelektronik (16) zur Kaltstellentemperaturmessung und eine Auswerteelektronik (26) umfasst,
**dadurch gekennzeichnet,**
**dass** die Sensoranschlusseinheit (7) und die Messelektronik (16) gemeinsam auf einer Vergleichsstellenleiterkarte (8) angeordnet sind und dass die Vergleichsstellenleiterkarte (8) räumlich beabstandet zu einer Basisleiterkarte (9) in der Gehäuseeinrichtung (4) angeordnet ist und dass auf der Basisleiterkarte (9) wenigstens die Auswerteelektronik (26) angeordnet ist.

2. Gargeschirr (1) nach dem vorhergehenden Anspruch, **dadurch gekennzeichnet, dass** die Messelektronik (16) wenigstens eine Temperatursensorik (36) zur Bestimmung der Temperatur der Vergleichsstellenleiterkarte (8) umfasst und dass die Temperatursensorik (36) auf der Vergleichsstellenleiterkarte (8) angeordnet ist.

3. Gargeschirr (1) nach einem der vorhergehenden Ansprüche, **dadurch gekennzeichnet, dass** die Vergleichsstellenleiterkarte (8) und die darauf angeordneten Komponenten, umfassend wenigstens die Sensoranschlusseinheit (7) und die Messelektronik (16), einen isothermen Block (28) bereitstellen, auf welchem die Kontaktstellen (17) wärmeleitend miteinander verbunden und elektrisch voneinander isoliert sind.

4. Gargeschirr (1) nach dem vorhergehenden Anspruch, **dadurch gekennzeichnet, dass** der isotherme Block (28) in eine Vergussmasse (38) eingebettet ist.

5. Gargeschirr (1) nach einem der beiden vorhergehenden Ansprüche, **dadurch gekennzeichnet, dass** der isotherme Block (28) mittels wenigstens einer Gehäusewandung (14) der Gehäuseeinrichtung (4) von dem Gargeschirrgrundkörper (2) und/oder von einer Energiespeichereinrichtung (23) zur Energieversorgung der Elektronikeinrichtung (13) räumlich isoliert ist.

6. Gargeschirr (1) nach einem der vorhergehenden Ansprüche, **dadurch gekennzeichnet, dass** die Vergleichsstellenleiterkarte (8) mittels einer Kontaktstiftanordnung (48) und vorzugsweise nur mittels einer Kontaktstiftanordnung (48) mit der Basisleiterkarte (9) verbunden ist.

7. Gargeschirr (1) nach dem vorhergehenden Anspruch, **dadurch gekennzeichnet, dass** die Kontaktstiftanordnung (48) gefederte Kontaktstifte (48a) umfasst.

8. Gargeschirr (1) nach einem der vorhergehenden Ansprüche, **dadurch gekennzeichnet, dass** die Leiterenden (25) direkt mit der jeweiligen Kontaktstelle (17) kontaktiert sind.

9. Gargeschirr (1) nach einem der vorhergehenden Ansprüche, **dadurch gekennzeichnet, dass** die Leiterenden (25) mit der jeweiligen Kontaktstelle (17) vercrimpt sind.
